# EUROPÄISCHE PATENTANMELDUNG

(11) **EP 4 207 543 A1**
(43) Veröffentlichungstag der Anmeldung: **05.07.2023**
(21) Anmeldenummer: 22213323.3
(22) Anmeldetag: 14.12.2022
(51) Int. Cl.: H02J 7/00, B60L 53/30

(54) **LADEVORRICHTUNG ZUM LADEN VON ELEKTRISCHEN ENERGIESPEICHERN**

(30) Priorität: 31.12.2021 DE 102021006497
(71) Anmelder: VOITAS Innovations GmbH, 85084 Reichertshofen (DE)
(72) Erfinder: HAGER, Armin, 85084 Reichertshofen (DE)
(74) Vertreter: Kuhnen & Wacker Patent- und Rechtsanwaltsbüro PartG mbB

(57) **Zusammenfassung**

Die Erfindung umfasst eine Ladevorrichtung zum Laden von elektrischen Energiespeichern, die eine Kabeltrommel, ein Ladekabel, eine Messeinheit und eine Ladesteuereinheit aufweist. Die Messeinheit gibt einen Messwert einer Temperatur an die Ladesteuereinheit weiter, welche basierend auf dem Messwert der Temperatur einen Ladevorgang des elektrischen Energiespeichers steuert. Überschreitet der Temperaturmesswert, der von der Messeinheit gemessen wird, einen vorbestimmten Schwellwert, steuert die Ladesteuereinheit den Ladestrom derart, dass dieser verringert wird, sodass die Temperatur gesenkt wird.

## Beschreibung

Die vorliegende Offenbarung betrifft eine Ladevorrichtung zum Laden eines elektrischen Energiespeichers.

Vorrichtungen zum Laden von elektrischen Energiespeichern, wie beispielsweise Batteriesysteme von Elektrofahrzeugen, haben in den letzten Jahren enorm an Bedeutung gewonnen, da insbesondere die Nutzung von Elektroautos stark gefördert wurde. Zum Laden von Elektroautos werden diese über ein Ladekabel mit einer öffentlichen oder privaten Ladestation verbunden. Bei öffentlichen Ladestationen ist in der Regel kein Ladekabel vorhanden, sondern muss vom Bediener des Elektroautos selbst mitgeführt und bei Bedarf angeschlossen werden.

Somit ist der Bediener des Elektroautos in der Regel gezwungen, ein Ladekabel mitzuführen und dieses passend zu verstauen. Bei privaten Ladestationen lässt sich dieser Umstand umgehen, da hier ein fest installiertes Ladekabel vorgesehen sein kann, welches an der privaten Ladestation verstaut wird. Hierzu gibt es im Stand der Technik bereits zahlreiche Lösungen. Dabei wird das Ladekabel in der Regel händisch bzw. manuell an einer festen Haltevorrichtung für das Ladekabel aufgewickelt.

Das manuelle Aufwickeln von Ladekabeln birgt jedoch mehrere Nachteile. Zum einen erhöht das manuelle Aufwickeln den zeitlichen Aufwand und zum anderen kann ein fehlerhaftes Aufwickeln Schäden an dem Ladekabel verursachen. Darüber hinaus muss der Bediener das Ladekabel aus Sicherheitsgründen komplett abwickeln, wodurch die vorher genannten Nachteile regelmäßig auftreten.

### Kurzfassung der Erfindung

Die vorliegende Offenbarung hat zur Aufgabe, eine alternative Ladevorrichtung zum Laden von elektrischen Energiespeichern vorzusehen, die die vorstehenden Nachteile nicht aufweist und eine einfache, betriebssichere und schadensfreie Handhabung gewährleistet.

Diese Aufgabe wird durch die Merkmale der unabhängigen Ansprüche gelöst. Weitere vorteilhafte Ausführungsformen und Weiterentwicklungen sind Gegenstand der sich daran anschließenden Ansprüche.

Die Erfindung umfasst eine Ladevorrichtung zum Laden von elektrischen Energiespeichern, die eine Kabeltrommel, ein Ladekabel, eine Messeinheit und eine Ladesteuereinheit aufweist.

Das Ladekabel, das konfiguriert ist, die elektrischen Energiespeicher mit Leistung zu versorgen, ist in der Kabeltrommel aufgenommen, wobei die Kabeltrommel über eine Aufrollmechanik verfügt, über welche das Ladekabel händisch auf- bzw. abgerollt oder automatisch auf- bzw. abgerollt werden kann, wobei jedoch kein händisches Wickeln des Ladekabels erforderlich ist.

Die Aufrollmechanik umfasst eine integrierte Feder, wobei die Feder mit einer Kraft gegen ein Abrollen des Ladekabels vorspannt. Dadurch ist die Aufrollmechanik derart konfiguriert, dass das Ladekabel dauerhaft mit einer Gegenkraft beaufschlagt ist, wodurch das Ladekabel zu jedem Zeitpunkt auf Spannung gehalten ist.

Darüber hinaus beinhaltet die Kabeltrommel, die die Aufrollmechanik aufweist, eine Ladekabelführung, welche das Ladekabel während eines automatischen Aufrollens führt, sodass das Ladekabel auf eine vorbestimmte Weise aufgerollt wird.

Ein Abrollen des Ladekabels stellt eine erforderte Länge des Ladekabels für das Laden der elektrischen Energiespeicher zur Verfügung, wobei gleichzeitig verhindert wird, dass das Ladekabel dabei verschmutzt oder beschädigt wird. Nach dem Laden wird das Ladekabel automatisch aufgerollt, wodurch ebenso eine Beschädigung des Ladekabels aufgrund einer falschen Wicklung verhindert wird.

Bei einem längeren Ladevorgang der elektrischen Energiespeicher ist es möglich, dass es bei einem nicht vollkommen abgerollten Ladekabel, weil nicht die gesamte Länge des Ladekabels erforderlich ist, zu einer starken Wärmeentwicklung kommt. In einem Fall, bei welchem die Temperatur zu hoch wird, können Schäden am Kabel und/oder am elektrischen Energiespeicher auftreten. Daher ist eine Messeinheit vorgesehen, die zumindest einen Temperatursensor aufweist, welcher konfiguriert ist, die Temperatur in der Ladevorrichtung zu messen.

Die Messeinheit gibt einen Messwert der Temperatur an die Ladesteuereinheit weiter, welche basierend auf dem Messwert der Temperatur einen Ladevorgang des elektrischen Energiespeichers steuert. Überschreitet der Temperaturmesswert, der von der Messeinheit gemessen wird, einen vorbestimmten Schwellwert, steuert die Ladesteuereinheit den Ladestrom derart, dass dieser verringert wird, bis sich die Temperatur um einen vorbestimmten Betrag gesenkt hat. Anschließend wird der Ladestrom wieder erhöht.

Insbesondere verfügt die Ladevorrichtung zum Laden von elektrischen Energiespeichern über zwei Relaiseinheiten, wobei die erste Relaiseinheit ein drei-phasiges Laden und die zweite Relaiseinheit ein ein-phasiges Laden ermöglicht. Ein ein-phasiges Laden ermöglicht ein Laden des elektrischen Energiespeichers mit einer geringen Leistung. Dadurch kann der Ladestrom mittels dieser Relaiskonfiguration weiter verringert werden, falls die Temperatur in der Ladevorrichtung zu langsam sinkt. Damit kann eine schnelle Temperatursteuerung erreicht werden.

Die Konfiguration der Ladevorrichtung zum Laden von elektrischen Energiespeichern gemäß der vorliegenden Offenbarung ermöglicht es, dass eine Beschädigung am Ladekabel zum Laden von elektrischen Energiespeichern zuverlässig verhindert wird.

### Zeichnungen

- Figur 1: ist eine dreidimensionale Gesamtansicht einer Ladevorrichtung zum Laden von elektrischen Energiespeichern gemäß einer ersten Ausführungsform.
- Figur 2: ist eine dreidimensionale Schnittansicht der Ladevorrichtung zum Laden von elektrischen Energiespeichern gemäß der ersten Ausführungsform.
- Figur 3: ist eine dreidimensionale Ansicht einer Kabeltrommel gemäß der ersten Ausführungsform, die eine interne Verdrahtung der Kabeltrommel veranschaulicht.
- Figur 4: ist eine schematische Schnittansicht der Ladevorrichtung gemäß der ersten Ausführungsform, die eine interne Bauraumaufteilung und eine Anordnung einer Messeinheit veranschaulicht.
- Figur 5: ist ein Flussdiagramm, das einen Steuerablauf eines Steuerverfahrens, das von der Ladesteuereinheit ausgeführt wird, veranschaulicht.

### Beschreibung der Ausführungsformen

Im Folgenden werden verschiedene Ausführungsformen der vorliegenden Erfindung beschrieben. Komponenten, welche über einzelne Ausführungsformen hinaus identisch sind, sind mit den gleichen Bezugszeichen angegeben. Darüber hinaus wird auf redundante Beschreibungen dieser Komponenten verzichtet.

### (Erste Ausführungsform)

Eine Ladevorrichtung 1 zum Laden von elektrischen Energiespeichern gemäß einer ersten Ausführungsform umfasst ein Gehäuse 2, ein Ladekabel 3 mit einem Ladestecker 4, eine Haltevorrichtung 6, einen Leistungsversorgungsanschluss 7, eine Kabeltrommel 8, eine Ladesteuereinheit 9, ein Relaispaar 10, eine Leistungsversorgungseinheit 11, einen Stromsensor 12 sowie eine Messeinheit 13.

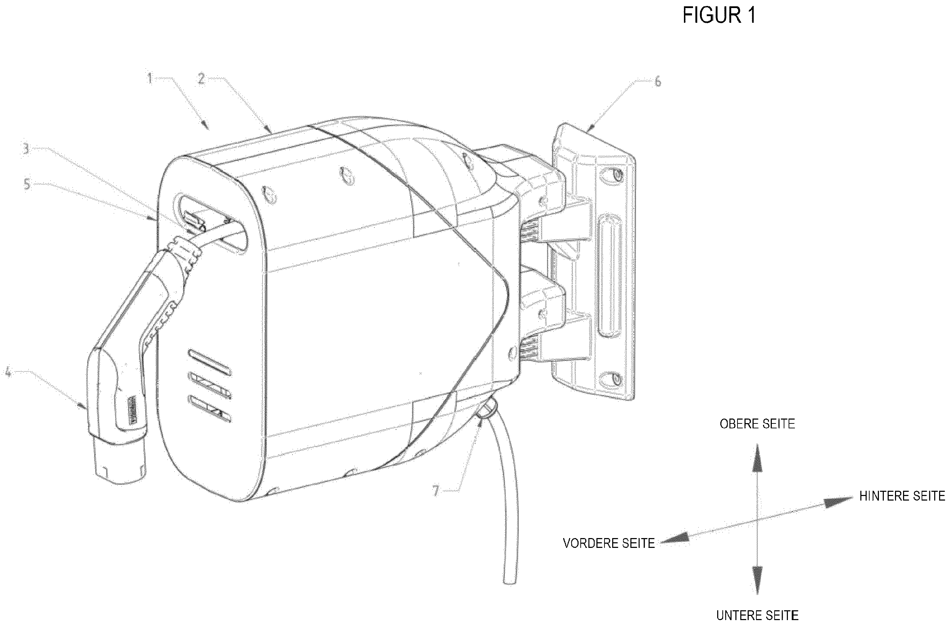

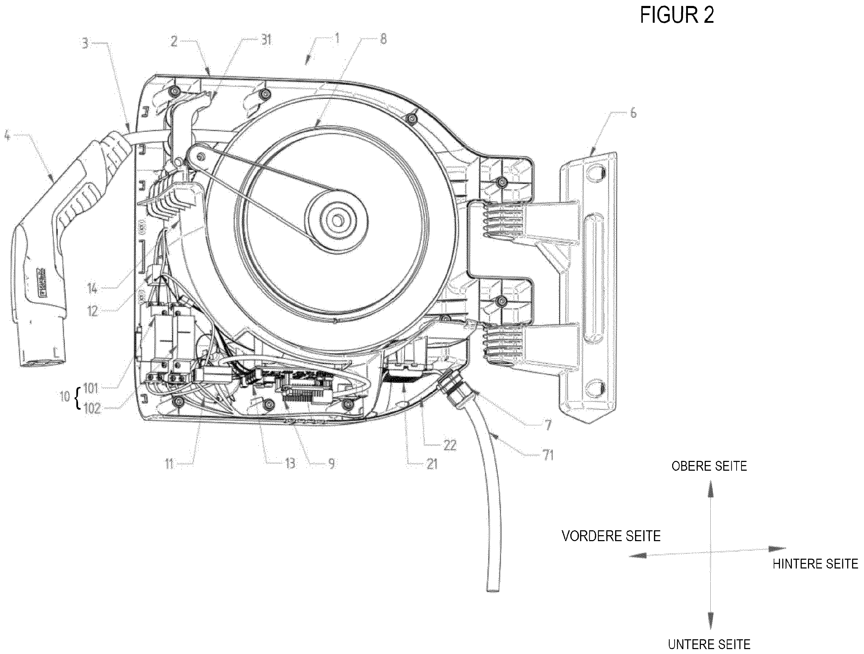

Figuren 1 und 2 zeigen eine dreidimensionale Gesamtansicht der Ladevorrichtung zum Laden von elektrischen Energiespeichern gemäß der ersten Ausführungsform. Die Ladevorrichtung 1 umfasst das Gehäuse, welches das Ladekabel 3, die Kabeltrommel 8, die Ladesteuereinheit 9, das Relaispaar 10, die Leistungsversorgungseinheit 11, den Stromsensor und die Messeinheit 13 aufnimmt. Zudem sind am Gehäuse ein Leistungsversorgungsanschluss 7, über welchen eine externe Leistungsversorgungsleitung angeschlossen ist, und eine Haltevorrichtung 6, mittels derer die Ladevorrichtung 1 an einem geeigneten Ort befestigt werden kann, angebracht. Im Gehäuse 2 ist zudem eine Gehäuseöffnung 5 ausgebildet. Das Ladekabel 3 ist über die Gehäuseöffnung 5 aus dem Gehäuse 2 herausführbar.

Eine vordere Seite der Ladevorrichtung 1 ist als eine Seite definiert, an welcher die Gehäuseöffnung 5 ausgebildet ist und welche gegenüber einer hinteren Seite der Ladevorrichtung 1, an welche die Haltevorrichtung 6 ausgebildet ist, liegt.

Eine obere Seite der Ladevorrichtung 1 ist als eine Seite definiert, die entlang einer Schwerkraftrichtung an einem oberen Ende des Gehäuses 2 liegt. Eine untere Seite der Ladevorrichtung 1 ist als eine Seite definiert, die entlang der Schwerkraftrichtung an einem unteren Ende des Gehäuses 2 liegt.

Wie in Figur 2 gezeigt, wird ein Großteil des Innenraums des Gehäuses 2 von der Kabeltrommel 8 eingenommen. Die Kabeltrommel 8 ist derart konfiguriert, dass das Ladekabel 3 auf der Kabeltrommel 8 aufgerollt werden kann. Insbesondere verfügt die Kabeltrommel 8 über eine Aufrollmechanik, die ermöglicht, dass das Ladekabel 3 automatisch auf der Kabeltrommel 8 aufgerollt wird. Hierzu ist beispielsweise eine Blattfeder (nicht gezeigt) im Inneren der Kabeltrommel 8 vorgesehen. Diese erzeugt eine Gegenkraft (Vorspannkraft), sobald das Ladekabel 3 aus dem Gehäuse 2 herausgeführt wird. Hierbei sei erwähnt, dass das Ladekabel 3 bereits in einem unbelasteten Zustand, in welchem die Blattfeder keine Gegenkraft ausübt, zumindest teilweise aus der Gehäuseöffnung 5 herausgeführt sein kann.

Durch die Gegenkraft, die die Blattfeder erzeugt, sobald das Ladekabel 3 durch eine Zugkraft aus der Gehäuseöffnung 5 herausgeführt wird, wird das Ladekabel 3 stets auf Spannung gehalten. Das Ladekabel 3 kann eine beliebige Länge, wie etwa zwei bis zwölf Meter, aufweisen, solange eine ausreichende Länge des Ladekabels 3 auf der Kabeltrommel 8 aufgerollt werden kann. Die Kabeltrommel 8 ermöglicht damit einem Bediener, eine erforderte Länge des Ladekabels 3 abzurollen, wobei die Kabeltrommel 8 dabei verhindert, dass das Ladekabel 3 in Bodenkontakt kommt, da es auf Spannung gehalten wird.

Darüber hinaus zeigt Figur 2 das Ladekabel 3, das einen Ladestecker 4 umfasst und durch eine Kabelführung 31 geführt ist. Die Kabelführung 31 ist ein Element, das so konfiguriert ist, dass das Ladekabel 3 auf eine vorbestimmte Weise auf die Kabeltrommel 8 aufgerollt wird, wenn die Zugkraft niedriger als die Gegenkraft der Blattfeder ist. Dadurch wird das Ladekabel 3 stets auf gleiche Weise aufgerollt und ein Knicken, ein Biegen oder ein ungewolltes Überlappen des Ladekabels verhindert. Der Ladestecker 4 ist ein Element, das konfiguriert ist, das Ladekabel 3 mit einem elektrischen Energiespeicher zu verbinden. Der Ladestecker 4 kann beispielsweise ein Stecker vom Typ-2 sein, welcher zum Laden von Batterien bzw. Akkumulatoren in Elektrofahrzeugen eingesetzt wird. Aber natürlich sind grundsätzlich auch andere Stecker-Typen mit der erfindungsgemäßen Ladevorrichtung einsetzbar.

Die in Figur 2 gezeigte Haltevorrichtung 6 dient dazu, die Ladevorrichtung 1 an einem geeigneten Ort zu befestigen. Beispielsweise kann die Haltevorrichtung 6 an einer Wand oder einer Art Säule über eine Schraubverbindung befestigt werden. Ferner weist die Haltevorrichtung 6 Rotationselemente 61 auf, die es ermöglichen, dass die Ladevorrichtung 1 um eine Drehachse geschwenkt werden kann.

Der Leistungsversorgungsanschluss 7, welcher an dem Gehäuse 2 angebracht ist, ermöglicht das Anschließen einer externen Leistungsversorgungsleitung 71 an der Ladevorrichtung 1. Der Leistungsversorgungsanschluss 7 kann beispielsweise als eine wasserdichte Kabeldurchführung ausgebildet sein. Die Leistungsversorgungsleitung 71 wird über den Leistungsversorgungsanschluss 7 ins Innere der Ladevorrichtung 1 geführt und durch den Leistungsversorgungsanschluss 7 sicher gehalten.

Die Ladevorrichtung 1 dient zum Laden von elektrischen Energiespeichern, wobei der Ladevorgang von der Ladesteuereinheit 9 gesteuert wird. Die Ladesteuereinheit steuert den Ladevorgang basierend auf Parametern, wie etwa der Temperatur, der Leistungserzeugung einer Photovoltaik-Anlage, eines Leistungsbedarfs im elektrischen Energiespeichers, eines Leistungsverbrauchs eines vorbestimmten Verbrauchers, einer Programmeinstellung und dergleichen, und passt insbesondere einen Ladestrom basierend auf diesen Parametern geeignet an. Die Parameter können beispielsweise über eine drahtlose oder eine drahtgebundene Kommunikationsschnittstelle von der Ladesteuereinheit 9 erlangt werden, wobei die Parameter von zumindest einer externen Vorrichtungen drahtlos oder drahtgebunden übermittelt werden.

Darüber hinaus ist das Relaispaar 10 im Gehäuse 2 vorgesehen. Das Relaispaar 10 ist in eine interne Verdrahtung im Gehäuse 2 eingebunden und umfasst insbesondere eine erste Relaiseinheit 101 und eine zweite Relaiseinheit 102. Das Relaispaar 10 ist derart konfiguriert, dass die Ladevorrichtung 1 zwischen einem ein-phasigen und einem drei-phasigen Laden schalten kann, wobei die erste Relaiseinheit ein ein-phasiges Laden und die zweite Relaiseinheit ein drei-phasiges Laden ermöglichen. Dadurch kann die Ladesteuereinheit 9 einen größeren Leistungsbereich bei einem Ladevorgang zur Verfügung stellen. Ein Ladevorgang von gängigen elektrischen Energiespeichern, wie Batterien eines Elektrofahrzeugs, wird gestartet, sobald ein ausreichend hoher Ladestrom verfügbar ist. Beim ein-phasigen Laden muss dieser ausreichend hoheLadestrom lediglich für eine Phase bereitgestellt werden, weshalb das Laden bereits bei einer geringen Leistungszuführung durchgeführt werden kann.

Darüber hinaus sind die Leistungsversorgungseinheit 11 und der Stromsensor 12 im Gehäuse 2 angeordnet. Die Leistungsversorgungseinheit 11 ist vorgesehen, um die Ladesteuereinheit 9 und das Ladekabel 3 mit Leistung zu versorgen, indem sie mit der externen Leistungsversorgungsleitung 71 elektrisch verbunden ist. Der Stromsensor 12 ist vorgesehen, um einen Ladestrom, der durch die Ladesteuereinheit 9 gesteuert wird, zu messen.

Wie bereits erwähnt, kann ein Fall eintreten, in welchem das Ladekabel 3 nicht vollständig von der Kabeltrommel 8 abgerollt ist, da nicht die gesamte Längenkapazität des Ladekabels 3 erforderlich ist. In einem solchen Fall besteht jedoch die Möglichkeit, dass es aufgrund der hohen Leistungsübertragung bei einem zeitlich längerem Ladevorgang infolge von elektromagnetischen Interferenzen zu einer starken Wärmeentwicklung im Inneren des Gehäuses 2 und insbesondere in der Kabeltrommel 8 kommt. Um eine Beschädigung des Ladekabels 3, der Ladesteuereinheit 9 und/oder der elektrischen Energiespeicher zu verhindern, ist die Messeinheit 13 im Gehäuse 2 vorgesehen. Die Messeinheit umfasst insbesondere einen Temperatursensor, der die Temperatur im Inneren des Gehäuses 2 misst. Die Messeinheit 13 kommuniziert mit der Ladesteuereinheit, wobei der Temperaturmesswert der Messeinheit 13 als ein Parameter zum Steuern des Ladestroms dient. Ein Ablauf des Steuerverfahrens zum Schutz der Ladevorrichtung 1, das durch die Ladesteuereinheit 3 ausgeführt wird, wird später beschrieben.

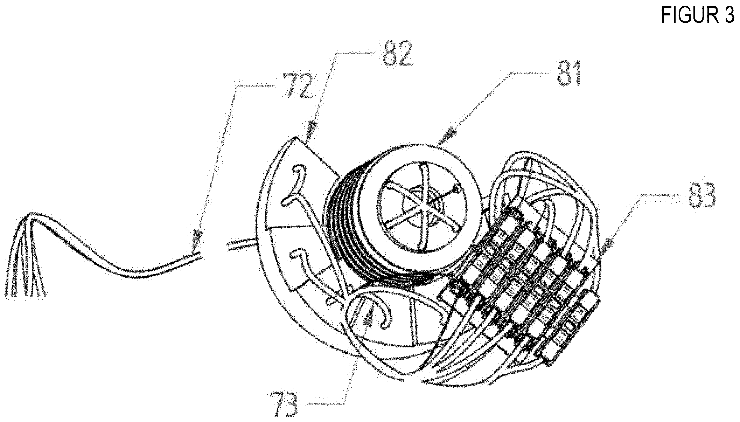

Mit Bezug zu Figur 3 wird nachstehend die Verbindung zwischen dem Ladekabel 3, der Kabeltrommel 8 und einer Leistungsversorgungsleitung 71 beschrieben. Die Kabeltrommel 8 weist eine zylindrische Rohreinheit 81 auf, welche sich in einem Rotationszentrum der Kabeltrommel befindet. Die Rohreinheit 81 erstreckt sich entlang der Rotationsachse und ist an beiden Seiten offen, wobei an einer der Seitenflächen der Rohreinheit 81 Kontaktanschlüsse vorgesehen sind, an welchen ein Draht angeschlossen werden kann. Eine interne Drahtverbindungsleitung 72 stellt eine elektrische Verbindung zwischen der Leistungsversorgungseinheit 11 und den Kontaktanschlüssen an der Rohreinheit 81 her. Die Rohreinheit 81 ist wiederum mit einem Schleifkontaktelement 82 in Kontakt. Das Schleifkontaktelement 82 ist bogenförmig um die Rohreinheit 81 ausgebildet, weist Übergangsdrähte 73 auf, die mit dem Ladekabel 3 über die Übergangskontaktelemente 83 verbunden sind. Das Schleifkontaktelement 82 ist derart konfiguriert, dass entsprechende Pfade von elektrischen Leitungen entsprechend verlängert sind. Dadurch wird eine elektrische Verbindung von der Leistungsversorgungseinheit 11 zum Ladekabel 3 ermöglicht und sichergestellt, dass sich die Kabeltrommel 8 beim Abrollen des Ladekabels 3 problemlos drehen kann.

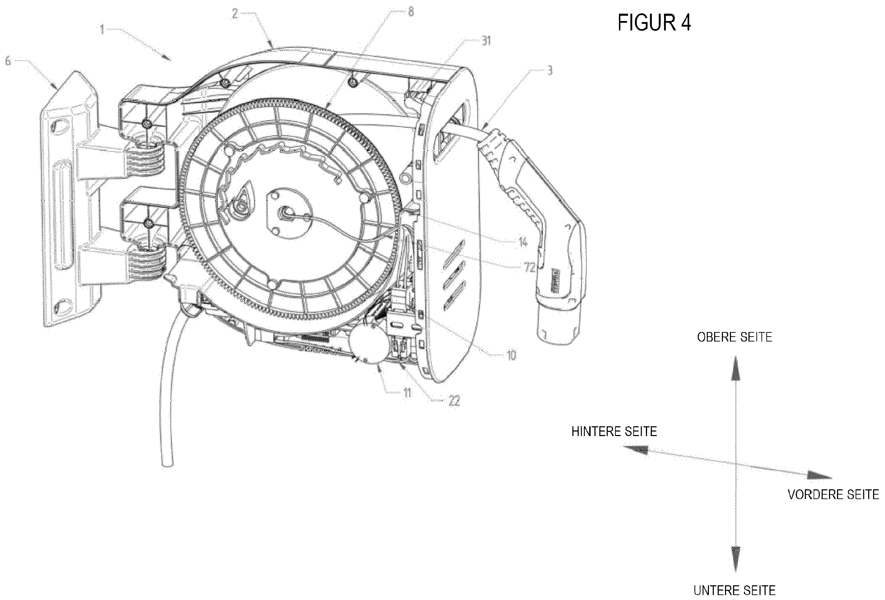

Figur 4 ist eine schematische Schnittansicht der Ladevorrichtung 1 gemäß der ersten Ausführungsform, die eine interne Bauraumaufteilung und eine Anordnung einer Messeinheit 13 veranschaulicht.

Das Innere des Gehäuses 2 lässt sich in drei strukturelle Bauräume aufteilen. Wie bereits zuvor erwähnt, nimmt die Kabeltrommel 8 den größten Bauraum im Inneren des Gehäuses 2 ein. Die Bauraumgröße bestimmt sich hierbei durch die Kabeltrommel 8, das Ladekabel 3 und die Kabelführung 31. Der Bauraum, in welchem die Kabeltrommel 8 aufgenommen ist, wird als ein Kabeltrommelbauraum 23 bezeichnet. Ferner ist die Messeinheit 13 im Kabeltrommelbauraum 23 angeordnet.

Auf einer unteren Seite der Kabeltrommel 8, welche eine Seite der Kabeltrommel 8 in Richtung der unteren Seite ist, wird der Bauraum im Inneren des Gehäuses 2 durch ein Wasserabführungselement 14 aufgeteilt, wodurch ein Bauraum für elektronische Komponenten unterhalb des Kabeltrommelbauraum 23 entsteht. Das Wasserabführungselement 14 dient zum Abführen von Wasser, welches beispielsweise über das Aufrollen des Ladekabels 3 in das Innere des Kabeltrommelbauraums 23 gelangt. Dementsprechend dichtet das Wasserabführungselement 14 den Bauraum für elektronische Komponenten vom Kabeltrommelbauraum 23 ab. An einem Punkt, der am weitesten auf der unteren Seite liegt, befindet sich zudem eine Wasserabführungsöffnung in dem Wasserabführungselement 14, die das Gehäuse an der Unterseite des Gehäuses zur Außenseite öffnet, wodurch das Wasser im Inneren des Gehäuses 2 abfließt.

Der Bauraum für elektronische Komponenten wird durch ein Trennelement in einen ersten Elektronikbauraum 21 und einen zweiten Elektronikbauraum 22 aufgeteilt. Der erste Elektronikbauraum 21 nimmt die externe Leitungsversorgungsleitung 71 auf. Im Inneren des ersten Elektronikbauraums 21 befindet sich ein Anschlusselement, an welchem die externe Leistungsversorgungsleitung 71 angeschlossen wird. Das Anschlusselement im ersten Elektronikbauraum weist eine feste Kabelführung zum zweiten Elektronikbauraum auf, wodurch eine Leistungsversorgung sichergestellt ist, die Bauräume jedoch voneinander getrennt sind.

Die Ladesteuereinheit 9, das Relaispaar 10, die Leistungsversorgungseinheit 11 und der Stromsensor 12 sind demnach im zweiten Elektronikbauraum aufgenommen. Die Messeinheit 13 ist mit der Ladesteuereinheit 9 elektrisch verbunden, wobei die elektrische Verbindung zwischen der Messeinheit 13 und der Ladesteuereinheit 9 wasserdicht versiegelt ist. Durch die Aufteilung der Bauräume ist sichergestellt, dass die elektronischen Komponenten vor Schmutz und Wasser geschützt sind. Ferner werden die internen elektronischen Komponenten über das Anschlusselement im ersten Elektronikbauraum 21 mit Leistung versorgt. Somit kann eine externe Leistungsversorgungsleitung 71 ausgetauscht werden, ohne, dass eine Gefahr besteht, dass Schmutz oder Wasser ins Innere des zweiten Elektronikbauraums 22 gelangt. Somit kann wiederum ein Defekt der elektronischen Komponenten verhindert werden.

Wie bereits erwähnt ist die Messeinheit 13 im Inneren des Kabeltrommelbauraums 23 vorgesehen. Die Messeinheit 13 umfasst bei der ersten Ausführungsform einen Temperatursensor, der an einer Position angeordnet ist, die einerseits möglichst nahe an einer Peripherie der Kabeltrommel 8 liegt und andererseits am weitesten von der Gehäuseöffnung 5 entfernt ist. Dadurch kann sichergestellt werden, dass der Temperatursensor der Messeinheit 5 eine Temperatur an einer Position misst, an welcher die Temperatur im Inneren des Gehäuses 2 einer maximalen Temperatur am nächsten ist. Dadurch arbeitet die Ladesteuereinheit 9 zuverlässig, wodurch keine übermäßigen Temperaturen im Inneren der Kabeltrommel 8 auftreten und die Ladevorrichtung 1 sicher betrieben werden kann.

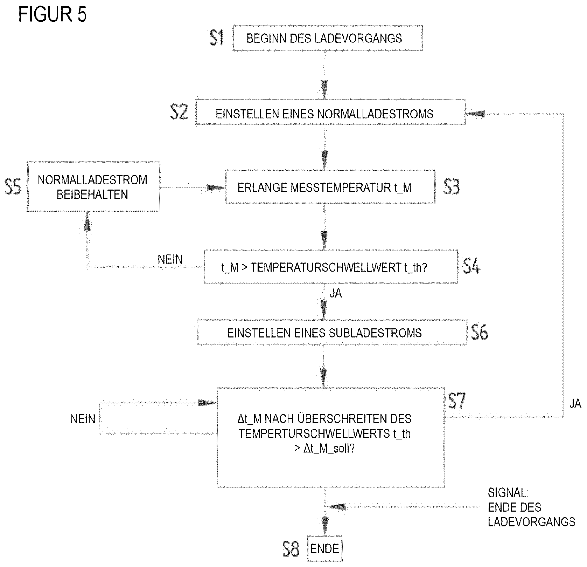

Im Folgenden wird mit Bezug zu Figur 5 ein Steuerablauf des Steuerverfahrens, das durch die Ladesteuereinheit 9 gemäß der ersten Ausführungsform ausgeführt wird, beschrieben.

Im Schritt S1 in Figur 5 wird der Ladevorgang eines elektrischen Energiespeichers durch die Ladevorrichtung 1 gestartet. Der Ladevorgang kann manuell durch einen Bediener oder aufgrund einer Betriebsbedingung automatisch durch die Ladevorrichtung 1 gestartet werden. Anschließend fährt das Steuerverfahren bei Schritt S2 fort.

In Schritt S2 stellt die Ladesteuereinheit 9 einen Normalladestrom ein. Der Normalladestrom ist ein Ladestrom, welcher unter normalen Betriebsbedingungen basierend auf einer zur Verfügung stehenden Leistung, Herstellervorgaben der elektrischen Energiespeicher, manuellen Ladeeinstellungen durch den Bediener und/oder dergleichen eingestellt ist. Anschließend fährt das Steuerverfahren bei Schritt S3 fort.

In Schritt S3 erlangt die Ladesteuereinheit 9 den Messwert der Temperatur, die durch die Messeinheit 3 erfasst wird, als eine Messtemperatur t_M. Anschließend fährt das Steuerverfahren bei Schritt S4 fort.

In Schritt S4 vergleicht die Ladesteuereinheit die Messtemperatur t_M mit einem Temperaturschwellwert t_th. Der Temperaturschwellwert t_th ist ein vorbestimmter Schwellwert, welcher repräsentativ dafür ist, dass beinahe eine kritische Temperatur an der Position des Temperatursensors erreicht ist. Eine kritische Temperatur liegt dann vor, wenn die Temperatur so hoch ist, dass Schäden am Ladekabel 3 oder in den elektronischen Komponenten verursacht werden können. Wenn in Schritt S4 bestimmt wird, dass die Messtemperatur t_M den Temperaturschwellwert t_th nicht überschritten hat (S4: NEIN), fährt das Steuerverfahren in Schritt S5 fort. Wenn in Schritt S4 bestimmt wird, dass die Messtemperatur t_M den Temperaturschwellwert t_th überschritten hat (S4: JA), fährt das Steuerverfahren in Schritt S6 fort.

In Schritt S5 wird der Normalladestrom beibehalten. Anschließend fährt der Steuerablauf mit Schritt S3 fort und erlangt erneut die Messtemperatur t_M.

In Schritt S6 stellt die Ladesteuereinheit 9 einen Subladestrom ein. Der Subladestrom ist ein Ladestrom, der eine geringere Leistung als der Normalladestrom führt. Der geringere Ladestrom führt dabei zu einer geringeren Wärmeentwicklung im Gehäuse 2, wodurch die Temperatur im Inneren des Gehäuses 2 gehalten wird oder absinkt. Wenn die Temperatur gehalten wird oder absinkt, ist sichergestellt, dass keine Schäden am Ladekabel 3 oder den elektronischen Komponenten verursacht werden. Nach dem Einstellen des Subladestroms fährt das Steuerverfahren in Schritt S7 fort.

In Schritt S7 überprüft die Ladesteuereinheit 3 anhand der aktuellen Messtemperaturen von der Messeinheit 3, ob sich die Messtemperatur seit Überschreiten des Temperaturschwellwerts t_th um einen vorbestimmten Betrag verringert hat. Hierzu wird der Temperaturmesswert zum Zeitpunkt des Überschreitens des Temperaturschwellwerts t_th zwischengespeichert und fortlaufend mit den aktuellen Messtemperaturen verglichen. Solange sich die Messtemperatur t_M nicht um einen vorbestimmten Betrag verringert hat (S7: NEIN), wird der Subladestrom beibehalten. Hat sich die aktuelle Messtemperatur t_M um einen vorbestimmten Betrag verringert (S7: JA), kehrt das Steuerverfahren zu Schritt S2 zurück, in welchem der Normalladestrom eingestellt wird.

Während des gesamten Steuerverfahrens kann der Ladevorgang durch ein externes Signal, das angibt, dass der Ladevorgang beendet werden soll, beendet werden. Mit einem Beenden des Ladevorgangs wird auch das Steuerverfahren beendet.

Das Steuerverfahren kann auch als einstufiges Temperaturüberwachungsverfahren vereinfacht konzipiert sein. Das heißt, es wird nur ein Temperaturschwellwert verwendet und der zeitliche Temperaturverlauf des Subladestroms wird nicht weiter überwacht.

Die Ladevorrichtung 1 gemäß der ersten Ausführungsform ist so konfiguriert, dass eine einfache, betriebssichere und schadensfreie Handhabung der Ladevorrichtung 1 ermöglicht ist. Insbesondere werden die Folgenden Vorteile erreicht.

Die Kabeltrommel 8 umfasst die Aufrollmechanik. Durch die Aufrollmechanik wird verhindert, dass das Ladekabel 3 durch einen Bodenkontakt beschädigt wird.

Die Haltevorrichtung 6 ist drehbar gelagert. Dadurch kann das Ladekabel 3 ohne ein Abknicken an der Gehäuseöffnung 5 abgerollt werden, selbst in einem Fall, in welchem das Ladekabel 3 hinsichtlich der Wand, an welcher die Haltevorrichtung 6 angebracht ist, in einem spitzen Winkel herausgeführt wird.

Die Ladesteuereinheit 9 ist konfiguriert, den Normalladestrom auf einen Subladestrom abzusenken, wenn die Messeinheit 13 eine Messtemperatur t_M erfasst, die einen vorbestimmten Temperaturschwellwert t_th überschreitet. Dadurch kann eine weitere Temperaturerhöhung im Inneren des Gehäuses 2 verhindert werden. Da der Normalladestrom erst wieder eingestellt ist, sobald sich die Temperatur im Inneren des Gehäuses um eine vorbestimmte Differenz verringert hat, wird zudem verhindert, dass der Ladestrom in kurzer Zeit wiederholt umgeschaltet wird.

Ferner umfasst die Ladevorrichtung 1 die Aufteilung des Bauraums und das Wasserabführungselement. Dadurch wird ermöglicht, dass kein Wasser, das in den Bauraum eindringt, im Inneren des Bauraums verbleibt, und, dass die elektronischen Komponenten vor Schmutz und Wasser geschützt sind.

### (Zweite Ausführungsform)

Eine zweite Ausführungsform unterscheidet sich hinsichtlich des Steuerablaufs des Steuerverfahrens zur ersten Ausführungsform. Strukturelle und bauliche Komponenten sind identisch zur ersten Ausführungsform.

Das Flussdiagramm aus Figur 5 stellt lediglich einen beispielhaften Steuerablauf dar. Das Steuerverfahren gemäß der zweiten Ausführungsform unterscheidet sich insbesondere in Schritt S7 zur ersten Ausführungsform.

Bei der zweiten Ausführungsform bestimmt die Ladesteuereinheit 9, ob die aktuelle Messtemperatur t_M einen vorbestimmten unteren Temperaturschwellwert t_th2 unterschritten hat, wobei der Temperaturschwellwert gemäß der ersten Ausführungsform bei der zweiten Ausführungsform einem ersten Temperaturschwellwert t_th1 entspricht. Wenn die Messtemperatur t_M den vorbestimmten zweiten Temperaturschwellwert t_th2, welcher niedriger als der erste Temperaturschwellwert t_th1 ist, unterschritten, kehrt das Steuerverfahren zu Schritt S2 zurück und stellt den Normalladestrom ein.

Mit der zweiten Ausführungsform können die gleichen Vorteile wie bei der ersten Ausführungsform erreicht werden.

### (Dritte Ausführungsform)

Eine dritte Ausführungsform unterscheidet sich hinsichtlich des Steuerablaufs des Steuerverfahrens zur ersten Ausführungsform. Strukturelle und bauliche Komponenten sind identisch zur ersten Ausführungsform.

Das Flussdiagramm aus Figur 5 stellt lediglich einen beispielhaften Steuerablauf dar. Das Steuerverfahren gemäß der dritten Ausführungsform umfasst einen weiteren Schritt im Steuerverfahren, welcher zusätzlich zu den Schritten der ersten Ausführungsform oder der zweiten Ausführungsform ausgeführt werden kann.

Die Ladesteuereinheit 9 erlangt dabei die Messwerte von der Messeinheit 13 und bestimmt eine Temperaturdifferenz in Abhängigkeit von der Zeit bzw. Temperaturänderung pro Zeiteinheit als eine differentielle Temperatur, um das transiente Verhalten der Temperatur zu erfassen. Überschreitet die differentielle Temperatur einen vorbestimmten Schwellwert bricht die Ladesteuereinheit den Ladevorgang ab, da der Schwellwert einer differentiellen Temperatur entspricht, das repräsentativ dafür ist, dass eine schwerwiegende Störung in der Ladevorrichtung vorliegt.

Das heißt, der Ladevorgang wird durch die Ladesteuereinheit 9 abgebrochen, wenn bestimmt wird, dass sich die Temperatur innerhalb eines vorbestimmten Zeitraums zu stark erhöht hat. Der Schwellwert ist demnach signifikant für eine schwerwiegende Störung in der Ladevorrichtung 9.

Mit der dritten Ausführungsform können die gleichen Vorteile wie bei der ersten Ausführungsform erreicht werden. Darüber hinaus ist es möglich, den Ladevorgang bei Auftreten einer schwerwiegenden Störung rasch abzuschalten.

### (Weitere Modifikationen)

Hinsichtlich der Beschreibung der vorherigen Ausführungsformen sei erwähnt, dass verschiedene Elemente in den Ausführungsformen hinzugefügt oder ausgespart werden können. Insbesondere gilt, dass:
die Ladevorrichtung 1 nicht zwingend in einzelne Bauräume aufgeteilt sein muss,
die Ladevorrichtung nicht zwingend ein Wasserabführungselement aufweisen muss,
die Länge des Ladekabels beliebig wählbar ist, wobei die Ladevorrichtung 1 und die voreingestellten Schwellwerte auf die Länge des Ladekabels angepasst sind,
der Temperaturschwellwert kein fester Schwellwert sein muss, sondern nachträglich beispielsweise anhand einer Betriebsbedingung einstellbar ist,
die Haltevorrichtung nicht durch eine Schraubenverbindung befestigt sein muss, wobei die Haltevorrichtung eine beliebige Haltevorrichtung sein kann, die konfiguriert ist, die Ladevorrichtung 1 an einer bestimmten Position zu halten,
die Kabeltrommel 8 nicht zwingend eine Blattfeder beinhaltet und nicht zwingend federbelastet sein muss, wobei im Austausch zu einer Feder ein anderer Mechanismus vorgesehen ist, der ein automatisches Aufrollen des Ladekabels 3 ermöglicht,
der Temperatursensor nicht zwingend im Inneren des Kabeltrommelbauraums 23 positioniert sein muss, sondern auch im ersten oder zweiten Bauraum 21, 22 angeordnet sein kann, wobei in einem solchen Fall eine gemessene Temperatur anhand eines Kennfeldes auf eine Temperatur im Inneren des Kabeltrommelbauraum 23 umgerechnet wird oder der Schwellwert entsprechend eines vorbestimmten Zusammenhangs zwischen der Temperatur im Kabeltrommelbauraum 23 und dem ersten oder zweiten Bauraum 21, 22 eingestellt wird,
die Messeinheit 13 nicht zwingend einen einzelnen Temperatursensor umfasst, sondern mehrere Messwerte von verschiedenen Temperatursensoren an die die Ladesteuereinheit 9 weiterleitet, wobei die mehreren Temperatursensoren an unterschiedlichen Position im Inneren des Gehäuses 2 positioniert sind,
das Relaispaar 10 nicht zwingend vorgesehen sein muss oder mehr als zwei Relaiseinheiten vorgesehen sein können,
der Ladestecker 4 nicht zwingend ein Ladestecker vom Typ 2 sein muss.

Darüber hinaus kann die Ladevorrichtung 1 wie folgt vorteilhaft modifiziert werden.

Um das Eindringen von Schmutzpartikeln und Wasser effektiver zu verhindern, kann eine bürstenartige Struktur an der Gehäuseöffnung 5 vorgesehen sein, an welche das Ladekabel 3, das in das Gehäuse 2 geführt wird, entlangstreift. Dadurch können Schmutzpartikel und Wasser vom Ladekabel 3 entfernt werden.

Das Wasserabführungselement 14 und /oder das Gehäuse 2 können aus einem wärmeableitenden Material gefertigt sein, sodass das Wasserabführungselement 14 und /oder das Gehäuse 2 als eine Wärmesenke dienen und die im Inneren des Gehäuses 2 erzeugte Wärme besser abgeführt werden kann. Zusätzlich können im Gehäuse Lüftungsöffnungen ausgebildet sein.

Die Haltevorrichtung 6 kann zusätzlich einen Teleskoparm aufweisen, sodass die Haltevorrichtung 6 ausziehbar ist.

Ferner kann die Ladesteuereinheit 9 den Ladestrom basierend auf mehreren Temperaturschwellwerten auf verschiedene Subladeströme steuern. Falls beispielsweise ein höherer Schwellwert aus den mehreren Schwellwerten überschritten wird, kann die Ladesteuereinheit 9 den Normalladestrom auf einen niedrigeren Subladestrom aus den Subladeströmen steuern, um die Temperatur schneller abzusenken.

Dabei kann die Ladesteuereinheit 9 beispielsweise den Ladevorgang über das Relaispaar 10 von einem drei-phasigen Laden zu einem ein-phasigen Laden umschalten, um eine größere Verringerung des Ladestroms zu erreichen. Somit kann eine ausreichende Absenkung der Temperatur im Inneren des Gehäuses erzielt werden.

Ferner können die Schwellwerte auf Basis von weiteren Messwerten eingestellt werden. Beispielsweise kann ein weiterer Messwert angeben, wie viel von dem Ladekabel 3 von der Kabeltrommel 8 abgerollt wurde. Wenn nur wenig vom Ladekabel 3 abgerollt wurde, kann zum Beispiel nach Überschreiten des Temperaturschwellwerts t_th eine stärkere Temperaturabsenkung gefordert werden, bevor der Ladestrom wieder auf den Normalladestrom eingestellt wird.

Die Ladesteuereinheit 9 stellt den Subladestrom ein, sobald ein Temperaturschwellwert t_th überschritten ist. Um eine Verarbeitung zu vereinfachen und die Verarbeitungslast der Ladesteuereinheit 9 zu senken, kann die Ladesteuereinheit 9 konfiguriert sein, den Subladestrom für eine vorbestimmte Zeitdauer einzustellen. Dadurch muss keine weitere Verarbeitung von Messdaten ausgeführt werden, wobei dennoch sichergestellt werden kann, dass die Temperatur ausreichend sinkt. Ferner kann die Zeitdauer anhand einer Umgebungstemperatur eingestellt sein. In einem solchen Fall ist ein Kennfeld in der Ladesteuereinheit 9 hinterlegt, welches angibt, wie schnell sich die Temperatur in der Ladevorrichtung 1 bei einer bestimmten Umgebungstemperatur während des Ladens mit dem Subladestrom über die Zeit verringert.

Darüber hinaus kann ein Messwert, der angibt, wie viel von dem Ladekabel 3 von der Kabeltrommel 8 abgerollt wurde, verwendet werden, um eine Ladebedingung auszubilden. Dadurch kann erreicht werden, dass der Ladevorgang nur begonnen wird, wenn eine Mindestmenge des Ladekabels 3 abgerollt ist. Somit wird es bereits vor dem Beginn des Ladevorgangs wahrscheinlicher, dass eine kritische Temperatur nicht überschritten wird.

Die Ladesteuereinheit 9 kann die Parameter zur Steuerung des Ladestroms auf einen Normalladestrom beispielsweise von einem Smartmeter oder einer anderen Strommesseinheit erlangen. Dementsprechend kann die Ladesteuereinheit 9 insbesondere dann, wenn Rohdaten einer Messung übermittelt werden, weitere Berechnungseinheiten umfassen, welche die erlangten Daten verarbeiten und für die Ladesteuerung nutzen.

Bei der vorliegenden Offenbarung können die Merkmale der jeweiligen Ausführungsformen und Modifikationen beliebig miteinander kombiniert werden, solange kein technischer Widerspruch entsteht.

## Patentansprüche

1. Ladevorrichtung (1) zum Laden von elektrischen Energiespeichern aufweisend eine Kabeltrommel (8), welche mit einer Aufrollmechanik vorgesehen ist,
ein Ladekabel (3) zum Laden von elektrischen Energiespeichern, welches an einem Ende mit einem Ladestecker (4) versehen und an einem anderen Ende mit der Kabeltrommel (8) verbunden ist, um auf der Kabeltrommel (8) aufrollbar zu sein,
zumindest eine Ladesteuereinheit (9), welche konfiguriert ist, das Laden von zumindest einem elektrischen Energiespeicher zu steuern,
eine Messeinheit (13), welche zumindest einen Temperatursensor aufweist, wobei
die zumindest eine Ladesteuereinheit (9) konfiguriert ist, einen Ladestrom basierend auf Messwerten des zumindest einen Temperatursensors zu steuern.

2. Ladevorrichtung (1) zum Laden von elektrischen Energiespeichern gemäß Anspruch 1, wobei
die zumindest eine Ladesteuereinheit (9) konfiguriert ist, den Ladestrom zu verringern, wenn zumindest ein Messwert des zumindest einen Temperatursensors einen vorbestimmten Schwellwert überschreitet.

3. Ladevorrichtung (1) zum Laden von elektrischen Energiespeichern gemäß Anspruch 2, wobei
die zumindest eine Ladesteuereinheit (9) konfiguriert ist, den Ladestrom stufenweise zu verringern, wenn zumindest ein Messwert des zumindest einen Temperatursensors einen vorbestimmten Schwellwert überschreitet.

4. Ladevorrichtung (1) zum Laden von elektrischen Energiespeichern gemäß Anspruch 2 oder 3, wobei
die zumindest eine Ladesteuereinheit (9) konfiguriert ist, den Ladestrom zu erhöhen, wenn sich der Messwert des zumindest einen Temperatursensors, der zuvor den vorbestimmten Schwellwert überschritten hat, um einen vorbestimmten Betrag verringert.

5. Ladevorrichtung (1) zum Laden von elektrischen Energiespeichern gemäß einem der Ansprüche 2 bis 4, wobei
die zumindest eine Ladesteuereinheit (9) konfiguriert ist, den Ladestrom stufenweise zu erhöhen, wenn sich der Messwert des zumindest einen Temperatursensors, der zuvor den vorbestimmten Schwellwert überschritten hat, um einen vorbestimmten Betrag verringert.

6. Ladevorrichtung (1) zum Laden von elektrischen Energiespeichern gemäß einem der Ansprüche 1 bis 5, wobei
die zumindest eine Ladesteuereinheit (9) konfiguriert ist, einen Ladevorgang zu beenden, wenn zumindest ein Messwert des zumindest einen Temperatursensors einen oberen Grenzwert überschreitet und/oder eine differentielle Temperatur einen Schwellwert überschreitet.

7. Ladevorrichtung (1) zum Laden von elektrischen Energiespeichern gemäß einem der Ansprüche 1 bis 6, ferner aufweisend
eine Sensorik, die konfiguriert ist, eine Länge eines abgerollten Ladekabels (3) zu erfassen, wobei
die zumindest eine Ladesteuereinheit (9) konfiguriert ist, den vorbestimmten Schwellwert basierend auf der Länge des abgerollten Ladekabels (3) einzustellen und das Laden zu ermöglichen, wenn eine Mindestlänge des Ladekabels (3) abgerollt ist.

8. Ladevorrichtung (1) zum Laden von elektrischen Energiespeichern gemäß einem der Ansprüche 1 bis 7 ferner aufweisend:
eine Haltvorrichtung (6) zur festen Installation der Ladevorrichtung (1), wobei
die Haltevorrichtung (6) konfiguriert ist, um schwenkbar und/oder ausziehbar zu sein.

9. Ladevorrichtung (1) zum Laden von elektrischen Energiespeichern gemäß einem der Ansprüche 1 bis 8, wobei
die Kabeltrommel (8) mit dem Ladekabel, die zumindest eine Ladesteuereinheit (9) und die Messeinheit (13) in einem Gehäuse (2) aufgenommen sind, und
das Gehäuse (2) zumindest eine Gehäuseöffnung (5) aufweist, an welcher das Ladekabel (3) herausführbar ist,
die Kabeltrommel (8) eine Kabelführung (31) aufweist und federbelastet ist, und
das Gehäuse (2) an der Gehäuseöffnung (5), an welcher das Ladekabel (3) herausführbar ist, Schmutzfangbürsten aufweist, und an einer Peripherie des Gehäuses (2) zumindest eine Belüftungsöffnung ausgebildet ist.

10. Ladevorrichtung (1) zum Laden von elektrischen Energiespeichern gemäß einem der Ansprüche 1 bis 9, wobei
die Kabeltrommel (8) ein Wasserabführungselement (14) aufweist, und
das Wasserabführungselement (14) eine Wasserabführungsöffnung aufweist, die an einer Unterseite des Gehäuses (2) öffnet.

11. Ladevorrichtung (1) zum Laden von elektrischen Energiespeichern gemäß einem der Ansprüche 1 bis 10, wobei
die zumindest eine Ladesteuereinheit (9) konfiguriert ist, mit einer externen Messeinheit und/oder externen Steuereinheit zu kommunizieren und von diesen Daten zu empfangen, und
die zumindest eine Ladesteuereinheit (9) den Ladestrom basierend auf Daten der externen Messeinheit und/oder Steuereinheit steuert.

12. Ladevorrichtung (1) zum Laden von elektrischen Energiespeichern gemäß Anspruch 11, ferner aufweisend:
zumindest zwei Relaiseinheiten (101, 102), die konfiguriert sind, während eines Ladevorgangs eines Energiespeichers basierend auf den Daten der Messeinheit (13) und/oder der externen Messeinheit und/oder Steuereinheit automatisch zwischen einem ein-phasigen Laden und einem drei-phasigen Laden zu schalten, wobei
eine erste Relaiseinheit (101) zum ein-phasigen Laden vorgesehen ist, und
eine zweite Relaiseinheit (102) zum drei-phasigen Laden vorgesehen ist.

13. Steuerverfahren für eine Ladevorrichtung (1) mit den Merkmalen gemäß einem der Ansprüche 1 bis 12, das folgende Schritte aufweist:
ein Einstellen (S2) eines Normalladestroms während eines Ladevorgangs,
ein Erlangen (S3) einer Messtemperatur (t_M),
ein Vergleichen (S4) der Messtemperatur (t_M) mit einem Temperaturschwellwert (t_th),
ein Beibehalten (S5) des Normalladestroms, wenn bestimmt wird, dass die Messtemperatur (t_M) gleich oder niedriger als der Temperaturschwellwert (t_th) ist und erneutes Vergleichen (S4) der Messtemperatur (t_M) mit einem Temperaturschwellwert (t_th),
ein Einstellen (S6) eines Subladestroms, wenn bestimmt wird, dass die Messtemperatur (t_M) einen Temperaturschwellwert (t_th) überschritten hat, wobei der Subladestrom niedriger als der Normalladestrom ist.

14. Steuerverfahren für eine Ladevorrichtung (1) gemäß Anspruch 13, das ferner folgende Schritte aufweist:
ein wiederholtes Vergleichen (S7) eines Temperaturänderungsbetrags (Δt_M) nach Überschreiten des Temperaturschwellwerts (t_th) mit einem Soll-Temperaturänderungsbetrag (Δt_M_SOLL) und Einstellen (S2) eines Normalladestroms, wenn der Temperaturänderungsbetrag (Δt_M) nach Überschreiten des Temperaturschwellwerts (t_th) größer als der Soll-Temperaturänderungsbetrag (Δt_M_SOLL) ist.

15. Steuerverfahren für eine Ladevorrichtung (1) gemäß Anspruch 13, das ferner folgende Schritte aufweist:
ein wiederholtes Vergleichen der Messtemperatur (t_M) mit einem unteren Temperaturschwellwert, der niedriger als der vorbestimmte Temperaturschwellwert ist, und Einstellen (S2) eines Normalladestroms, wenn die Messtemperatur (t_M) den unteren Schwellwert unterschritten hat.

16. Steuerverfahren für eine Ladevorrichtung (1) gemäß einem der Ansprüche 13 bis 15, das ferner folgende Schritte aufweist:
Erfassen einer differentiellen Temperatur und Abschalten des Ladevorgangs, wenn bestimmt wird, dass die differentielle Temperatur einen Schwellwert eines Änderungsbetrags, der signifikant für eine schwerwiegende Störung ist, überschreitet.
